# EUROPEAN PATENT APPLICATION

(11) **EP 4 752 595 A1**
(43) Date of publication of application: **03.06.2026**
(21) Application number: 24845513.1
(22) Date of filing: 18.07.2024
(51) Int. Cl.: G01S 7/481, G02B 26/08

(54) **DISTANCE MEASUREMENT DEVICE**

(30) Priority: 27.07.2023 JP 2023122214
(71) Applicant: DENSO CORPORATION, Kariya-city, Aichi 448-8661 (JP)
(72) Inventor: SAKAI Akira, Kariya-city, Aichi 448-8661 (JP)
(74) Representative: Kuhnen & Wacker Patent- und Rechtsanwaltsbüro PartG mbB
(86) International application number: PCT/JP2024/025730
(87) International publication number: WO 2025/023134

(57) **Abstract**

A mirror (18) of a distance measurement device (1) is oscillated and driven by an actuator (20) to scan light to an outside. A base (11) has the mirror (18) provided inside it. An oscillation shaft (13, 130), to which the mirror (18) is fixed, is rotatably supported by the base (11) with at least one end protruding from the base (11). A position holding portion (16) includes a biasing member (165) that biases the oscillation shaft (13, 130) toward one side in an axial direction, and a position regulating unit (161, 132) that restricts movement of the oscillation shaft (13) in a biasing direction, thereby holding the oscillation shaft (13) in the axial direction. A contact member (31) is fixed to the oscillation shaft (13) at an outside of the base (11). A distance between an end of the contact member (31) on the other side in the axial direction and the housing portion (50) is smaller than a distance between an end of the mirror (18) on the other side in the axial direction and the base (11).

## Description

### CROSS REFERENCE TO RELATED APPLICATION

This application is based on Japanese Patent Application No. 2023-122214, filed on July 27, 2023. The entire disclosure of the application is incorporated herein by reference.

### TECHNICAL FIELD

The present disclosure relates to a distance measurement device.

### BACKGROUND

Conventionally, rotary reciprocating actuators used in LIDAR (Light Detection And Ranging) have been known. For example, in Patent Literature 1, a rotation shaft to which a mirror is attached is rotatably mounted to left and right side walls of a base via bearings.

### PRIOR ART LITERATURE

### PATENT LITERATURE

Patent Literature 1: JP2022-127381A

### SUMMARY OF THE INVENTION

In a structure where the mirror is disposed between opposing walls as in Patent Literature 1, for example, when axial positioning is regulated using a preload spring, if an impact exceeding a load generated by the preload spring occurs, there is a risk that the mirror may come into contact with the walls and be damaged. An object of the present disclosure is to provide a distance measurement device capable of preventing breakage to a mirror.

The distance measurement device of the present disclosure scans light externally and measures the distance to an object by detecting light reflected from the object, and includes a mirror, a base, an oscillating shaft, a position holding portion, and a contact member.

The mirror is driven by an actuator to oscillate and scan light externally. The mirror is provided in the base. The oscillating shaft has the mirror fixed to it and is supported by the base so that the shaft can oscillate, with at least one end of the oscillating shaft protruding from the base. A position holding portion holds the oscillating shaft in the axial direction. The position holding portion includes a biasing member that biases the oscillating shaft toward one side in the axial direction, which is the biasing direction, and a position regulating unit that restricts movement of the oscillating shaft in the biasing direction. A contact member is fixed to the oscillating shaft at a location outside the base.

A fixed portion, which includes the base and is not driven by the actuator, is a housing portion. A distance between an end of the contact member on the other side in the axial direction and the housing portion is smaller than a distance between an end of the mirror on the other side in the axial direction and the base. As a result, breakage to the mirror can be prevented.

### BRIEF DESCRIPTION OF DRAWINGS

The above and other objectives, features and advantages of the present disclosure will become more apparent from the following detailed description with reference to the accompanying drawings.
FIG. 1 is a schematic diagram illustrating a distance measurement device according to a first embodiment.
FIG. 2 is a cross-sectional view illustrating an actuator according to the first embodiment.
FIG. 3 is a cross-sectional view illustrating an actuator according to a second embodiment.

### DETAILED DESCRIPTION

Hereinafter a distance measurement device according to the present disclosure will be described with reference to the drawings. Hereinafter, in multiple embodiments, the substantially same elements are denoted by the same reference signs, and the description thereof is omitted.

### First Embodiment

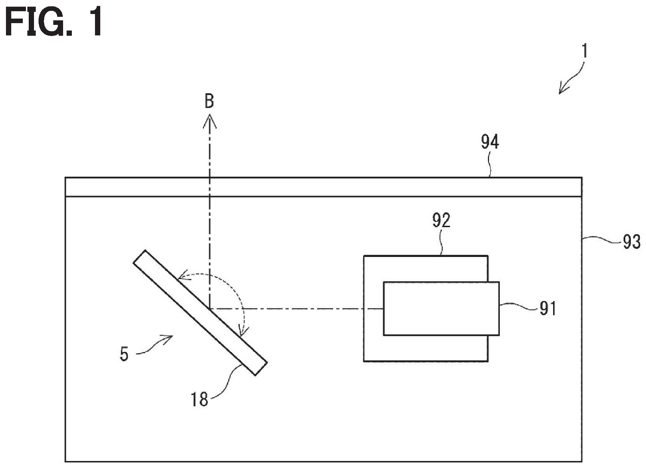

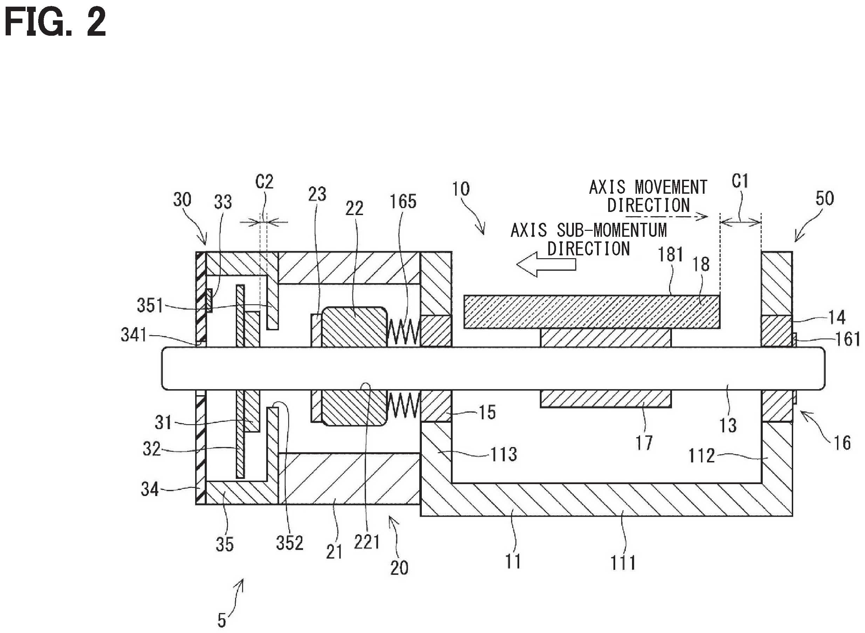

A first embodiment is shown in FIGS. 1 and 2. As shown in FIG. 1, a distance measurement device 1 is a LiDAR (Light Detection and Ranging) device that measures a distance to an object by emitting light and detecting a reflected light from the object to which the light was emitted. A distance measurement device 1 is mounted, for example, on a vehicle and is used to detect objects in front of the vehicle.

The distance measurement device 1 includes a light emitting unit 91, a light receiving unit 92, and an oscillating actuator 5, all of which are housed within a housing 93. The light emitting unit 91 intermittently emits a light beam B. The emitted light beam B is reflected by a mirror 18 that is driven to oscillate, and is emitted to an outside through an optical window 94. The light receiving unit 92 receives the reflected light from an object that has been irradiated with the light beam B. The light detected by the light receiving unit 92 is converted into an electrical signal, which is used to calculate the distance to the object.

As shown in FIG. 2, the oscillating actuator 5 includes a mirror unit 10, an oscillating motor 20, and an encoder 30, and other components. The mirror unit 10 includes a base 11, a spindle 13, a position holding portion 16, a holder 17, a mirror 18, and other components. The base 11 has a mounting portion 111 and retaining walls 112 and 113, and is formed integrally, for example, from metal. The mounting portion 111 is attached to a housing (not shown) by bolts or the like. The retaining walls 112 and 113 extend approximately perpendicular to the mounting portion 111 from both ends of the mounting portion 111.

The spindle 13 is arranged approximately parallel to the mounting portion 111 and is supported on the base 11 by bearings 14 and 15 provided in the retaining walls 112 and 113 so that the spindle 13 is rotatable. The spindle 13 is supported by the base 11 in an oscillatory manner. The bearings 14 and 15 in the present embodiment are ball bearings, but may be also other than ball bearings. The spindle 13 extends from the bearing 15 toward the outside of the base 11, and passes through the oscillating motor 20 and the encoder 30. Hereinafter, an oscillation axis direction of the spindle 13 will be simply referred to as an "axial direction" as appropriate.

The position holding portion 16 includes an E-ring 161 and a preload spring 165, and positions the spindle 13 in the axial direction by pressing it against one side in the axial direction. An E-ring 161 is provided on the outer side in the axial direction of the bearing 14 and functions as a stopper to prevent the bearing 14 from coming out from the spindle 13.

The preload spring 165 is provided between the rotor magnet 22 and the bearing 15, with one end in contact with an inner ring of the bearing 15 and the other end in contact with the rotor magnet 22. Another member may be provided between the rotor magnet 22 and the preload spring 165. The preload spring 165 urges the spindle 13 in a direction of the encoder 30 (a left direction in FIG. 2). That is, in the present embodiment, since the member for holding the axial position of the spindle 13 is not provided inside the base 11, optical considerations for the position holding portion 16 are unnecessary.

The holder 17 is press-fitted and fixed to the spindle 13. The mirror 18 is formed in a flat plate shape and is attached to the holder 17 to be symmetrical with respect to an oscillation axis. The holder 17 and the mirror 18 are formed symmetrically with respect to the oscillation axis, so that a moment of inertia during oscillating can be made equal in both directions.

The holder 17 and the mirror 18 are disposed inside the base 11 so that a mirror surface 181 faces away from the mounting portion 111, and are driven to oscillate by the oscillating motor 20. The mirror 18 reflects the light beam B output from the light emitting unit 91 using the mirror surface 181, and emits the light beam B to the outside of the distance measurement device in a direction corresponding to an oscillating position of the mirror 18, thereby scanning the light beam B within a predetermined scanning range.

The oscillating motor 20 is provided on one side of the mirror unit 10 in the axial direction. The oscillating motor 20 includes a stator 21, a rotor magnet 22, and other components. The stator 21 is fixed to the retaining wall 113 with bolts or other members. The stator 21 is provided with an electromagnetic coil and a fixed magnet (not shown). The rotor magnet 22 is a cylindrical, two-pole magnet. The spindle 13 is inserted through an axial hole 221 and the rotor magnet 22 is fixed to the spindle 13 by a magnet fixing member 23.

The rotor magnet 22 is an inner rotor, which is disposed inside the stator 21, and oscillates about a stationary position of the rotor magnet 22 when electric current is supplied to the electromagnetic coil. Here, the term "oscillation" refers to a movement in which forward and reverse rotation are periodically repeated within a predetermined angular range of less than 360°. When the supply of electric current to the electromagnetic coil is turned off, the rotor magnet 22 returns to and remains at the stationary position due to a magnetic force of the fixed magnet. A size of the rotor magnet 22 can be arbitrarily designed according to mounting constraints, the required magnetic force, and other factors.

The encoder 30 is, for example, a reflective optical encoder, which includes a disk hub 31, a disk 32, and a detection element 33, and is housed in a case 35. The disk hub 31 is press-fitted and fixed to the spindle 13. The disk 32 is attached to the disk hub 31 and rotates integrally with the spindle 13. A pattern of reflective and non-reflective areas is formed in a circumferential direction on the disk 32.

The detection element 33 is mounted on a substrate 34. The detection element 33 is an optical sensor that emits LED light, receives light reflected according to the rotation of the disk 32, and detects the rotational position of the disk 32 based on changes in an amount of received light. As a result, the encoder 30 is capable of detecting a drive position of the oscillating motor 20 or an oscillating position of the mirror 18. The substrate 34 is fixed to the case 35 by screws or the like (not shown). The substrate 34 includes a through hole 341 through which the spindle 13 is inserted.

The case 35 is formed in a bottomed cylindrical shape with an opening on a side opposite to the mirror unit 10, and is fixed to the stator 21 by, for example, through-bolts (not shown). An insertion hole 352 is formed in a bottom portion 351 of the case, through which the spindle 13 is inserted. The bottom portion 351 is positioned between the rotor magnet 22 and the disk hub 31. In the present embodiment, the base 11, the stator 21, and the case 35, which do not move even when the oscillating motor 20 is driven, are a housing portion 50.

In the present embodiment, the spindle 13 has its axial position regulated by the E-ring 161 and the preload spring 165, and is biased by the preload spring 165 in the direction opposite to the E-ring 161 (that is, to the left in the drawing). Here, if vibration or impact is applied to the oscillating actuator 5 and the spindle 13 moves in the axial direction, the mirror 18 may come into contact with the base 11, posing a risk of breakage to the mirror 18.

When an impact is applied to the oscillating actuator 5, movement of the spindle 13 to the left in the drawing is restricted by the E-ring 161. On the other hand, if an impact exceeding the load of the preload spring 165 is applied, there is a risk that the spindle 13 may move to the right in the drawing. To withstand greater impacts, it is conceivable to increase the spring force of the preload spring 165. However, in that case, an overall size would increase. Hereinafter, a direction in which the spindle 13 moves when subjected to an impact exceeding the spring force of the preload spring 165 (i.e., to the right in the drawing) shall be referred to as an "axial movement direction."

In the present embodiment, a portion is provided where a distance (clearance) between a member fixed to the spindle 13 and the housing portion 50 is smaller than a distance (clearance) C1 between the mirror 18 and the retaining wall 112 of the base 11 in the axial movement direction. More specifically, the clearance C2 between the disk hub 31 and the bottom portion 351 of the case 35 is smaller than the clearance C1 between the mirror 18 and the retaining wall 112.

As a result, when an impact exceeding the load of the preload spring 165 is applied to the oscillating actuator 5 and the spindle 13 moves in the axial movement direction, the disk hub 31 comes into contact with the case 35 before the mirror 18 contacts the base 11. Therefore, the mirror 18 does not collide with the base 11, and breakage to the mirror 18 can be prevented.

Furthermore, if, due to vibration or impact, the spindle 13 moves and the disk hub 31 comes into contact with the case 35, resulting in deformation or damage to the disk hub 31, a positional relationship between the disk 32 and the detection element 33 will become abnormal, leading to a sensing malfunction. As a result, it becomes possible to detect that an abnormality has occurred in the oscillating actuator 5.

As described above, the distance measurement device 1 of the present embodiment scans light externally and measures the distance to the object by detecting light reflected from the object, and includes the mirror 18, the base 11, the spindle 13, the position holding portion 16, and the disk hub 31.

The mirror 18 is swing-driven by the oscillating motor 20 to scan light externally. The base 11 has the mirror 18 provided inside it. The spindle 13 has the mirror 18 fixed to it and is rotatably supported by the base 11 in such a manner that at least one end thereof protrudes from the base 11. The position holding portion 16 includes the preload spring 165 that biases the spindle 13 toward one axial direction, and the E-ring 161 that restricts movement of the spindle 13 in the biasing direction (an axis sub-momentum direction), thereby maintaining the axial position of the spindle 13. The disk hub 31 is fixed to the spindle 13 at an outside of the base 11.

The housing portion 50 includes the base 11 and the fixed portion that is not driven by the oscillating motor 20. A distance between the end of the disk hub 31 on the side opposite to the biasing direction of the spindle 13 and the housing portion 50 is smaller than a distance between the end of the mirror 18 on the side opposite to the biasing direction of the spindle 13 and the base 11. More specifically, the clearance C2 between the disk hub 31 and the bottom portion 351 of the case 35 is smaller than the clearance C1 between the mirror 18 and the retaining wall 112.

As a result, if a shock exceeding the load of the preload spring 165 is applied to the oscillating actuator 5, the disk hub 31 will come into contact with the case 35, thereby preventing the mirror 18 from colliding with the base 11. Therefore, breakage to the mirror 18 can be prevented. Furthermore, if a structure is provided inside the base 11 that comes into contact with the base 11 before the mirror 18 does, optical considerations such as avoiding high reflectivity become necessary. In the present embodiment, since the disk hub 31, which serves as a contact member, is provided outside the base 11, optical considerations or restrictions for providing the contact structure can be reduced.

In the distance measurement device 1, outside the base 11, the oscillating motor 20 and the encoder 30 capable of detecting the oscillating position of the mirror 18 are provided. The encoder 30 includes the disk 32 that is integrally driven with the spindle 13, the disk hub 31 that is fixed to the spindle 13 and to which the disk 32 is attached, and the detection element 33 that detects the operating state of the disk 32. More specifically, the detection unit is an encoder, and the detection element 33 is an optical sensor that detects light reflected from the disk 32.

In the present embodiment, the contact member is the disk hub 31. When an impact is applied to the oscillating actuator 5, by adopting a structure in which the disk hub 31 comes into contact with the case 35, it is possible to detect an abnormality in the oscillating actuator 5.

The position holding portion 16 is provided outside the base 11. In other words, a member related to holding the axial position of the spindle 13 is not provided inside the base 11. The position regulating unit is the E-ring 161 provided on the side opposite to the preload spring 165, with the base 11 interposed between them. As a result, the spindle 13 can be positioned in the axial direction without affecting the scanning of light by the mirror 18.

### Second Embodiment

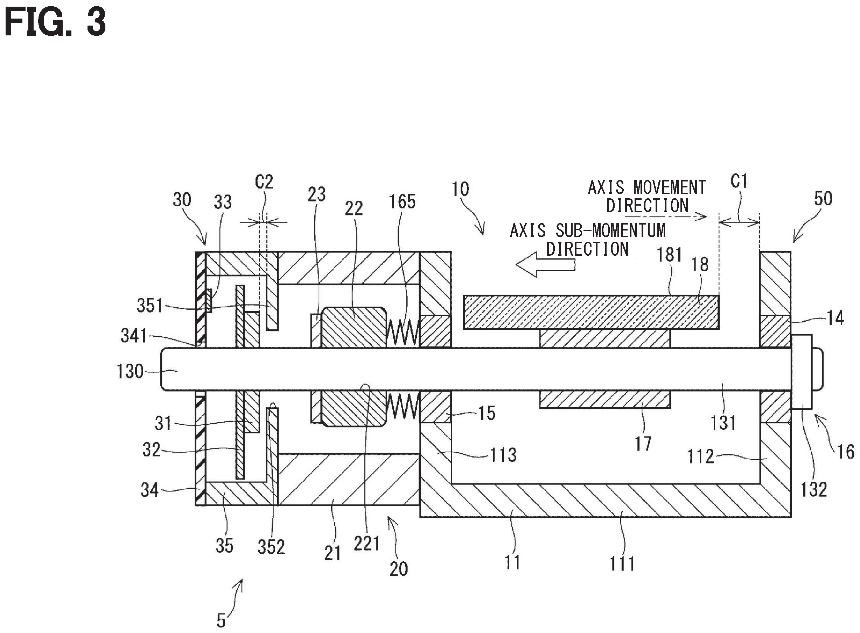

A second embodiment is shown in FIG. 3. In the present embodiment, a shape of the spindle 130 differs from that of the above embodiment, so this point will be mainly described. In the present embodiment, the spindle 130 is integrally formed with a shaft portion 131 and a position regulating unit 132. The position regulating unit 132 is provided so as to protrude radially outward from the shaft portion 131 on the axially outer side of the bearing 14, and functions as a retaining mechanism to prevent the spindle 130 from coming out. That is, in the present embodiment, the preload spring 165 and the position regulating unit 132 together constitute the position holding portion 16. Even with this configuration, the same effects as those of the above embodiments can be achieved.

In the embodiment, the spindles 13, 130 correspond to an "oscillating shaft," the E-ring 161 and the position regulating unit 132 correspond to a "position regulating unit," the preload spring 165 corresponds to a "biasing member," the encoder 30 corresponds to a "detection portion," the disk hub 31 corresponds to a "contact member" and a "holding member," and the disk 32 corresponds to a "detected portion."

### Other Embodiments

In the above embodiment, the clearance C2 between the disk hub 31 and the bottom portion 351 of the case 35 is formed to be smaller than the clearance C1 between the mirror 18 and the retaining wall 112. In another embodiment, the contact member may be a member other than the disk hub. That is, it is also acceptable to provide a portion where a clearance between the end on the axial movement side of a member other than the disk hub and the housing is smaller than the clearance C1. It should be noted that if the contact member is provided inside the base, optical considerations are required so as not to interfere with reflection by the mirror. Therefore, providing the contact member outside the base is preferable.

In the above embodiment, the detection element is an optical sensor. In other embodiments, means other than an optical sensor (for example, a magnetic sensor) may be used to detect the drive state of the spindle, and components other than an encoder may be used as the detection unit. In other embodiments, a structure and arrangement of the actuator and mirror unit may be different from those in the above-described embodiments, as long as the mirror can be oscillated. The present disclosure is not limited to the above-described embodiments, and various modifications may be made within the scope of the present disclosure.

The present disclosure has been made in accordance with the embodiments. However, the present disclosure is not limited to such embodiments and configurations. The present disclosure also includes various modification examples and modifications within the scope of equivalents. In addition, various combinations and forms, and other combinations and forms which include only one element, more elements, or less elements are further included in the scope and the spirit of the present disclosure.

## Claims

1. A distance measurement device for scanning light externally and measuring a distance to an object by detecting light reflected from the object, comprising:
a mirror (18) driven by an actuator (20) to oscillate and scan light externally;
a base (11) in which the mirror is provided;
an oscillating shaft (13, 130) to which the mirror is fixed, the oscillating shaft being supported by the base in an oscillatory manner, with at least one end of the oscillating shaft protruding from the base;
a position holding portion (16) that holds the oscillating shaft in an axial direction, the position holding portion including a biasing member (165) biasing the oscillating shaft toward one side in the axial direction, which is a biasing direction, and a position regulating unit (161, 132) restricting movement of the oscillating shaft in the biasing direction; and
a contact member (31) fixed to the oscillating shaft at an outside of the base, wherein
a fixed portion, which includes the base and is not driven by the actuator, is a housing portion (50), and
a distance between an end of the contact member on the other side in the axial direction and the housing portion is smaller than a distance between an end of the mirror on the other side in the axial direction and the base.

2. The distance measurement device according to claim 1, further comprising:
a detection unit (30) provided outside the base and configured to detect an oscillating position of the mirror or a drive position of the actuator, wherein
the detection unit includes:
a detected portion (32) driven integrally with the oscillating shaft;
a holding member (31) fixed to the oscillating shaft and to which the detected portion is attached; and
a detection element (33) configured to detect a drive state of the detected portion, and the contact member is the holding member.

3. The distance measurement device according to claim 2, wherein
the detection unit is an encoder, and
the detection element is an optical sensor configured to detect light reflected from the detected portion.

4. The distance measurement device according to any one of claims 1 to 3, wherein
the position holding portion is provided outside the base, and
the position regulating unit is an E-ring provided on a side opposite to the biasing member, with the base positioned between the E-ring and the biasing member.
